(19) **Europäisches Patentamt / European Patent Office / Office européen des brevets**

(11) **EP 4 535 786 A2**

(12) **EUROPEAN PATENT APPLICATION**
published in accordance with Art. 153(4) EPC

(43) Date of publication:
**09.04.2025 Bulletin 2025/15**

(21) Application number: **23784395.8**

(22) Date of filing: **19.07.2023**

(51) International Patent Classification (IPC):
**H04N 19/146** $^{(2014.01)}$   **G01S 13/58** $^{(2006.01)}$

(52) Cooperative Patent Classification (CPC):
**H04N 19/20**

(86) International application number:
**PCT/CN2023/108210**

(87) International publication number:
**WO 2023/193834 (12.10.2023 Gazette 2023/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.12.2022   CN 202211551603**

(71) Applicant: **Calterah Semiconductor Technology (Shanghai) Co., Ltd.**
**Shanghai 201210 (CN)**

(72) Inventor: **SUN, Yurong**
**Shanghai 201210 (CN)**

(74) Representative: **Meissner Bolte Nürnberg Patentanwälte Rechtsanwälte Partnerschaft mbB**
**Bankgasse 3**
**90402 Nürnberg (DE)**

(54) **VIDEO COMPRESSION METHOD AND APPARATUS, AND COMPUTER READABLE STORAGE MEDIUM**

(57)    A video compression method and apparatus, and a computer-readable storage medium. The video compression method comprises: acquiring a detection result of a first sensor, and determining a target motion parameter according to the detection result; determining a video compression parameter according to the target motion parameter; and performing video compression on first video data according to the video compression parameter. A video compression ratio can be dynamically adjusted according to detection results of the first sensor, and thereby the efficiency of video compression, transmission, or storage is improved.

Acquire a detection result of a first sensor, and determining a target mobility motion parameter according to the detection result — 101

Determine a video compression parameter according to the target motion mobility parameter — 102

Perform video compression on a first video data according to the video compression parameter — 103

**FIG. 1**

## Description

The present application claims priority of Chinese patent application No. 202211551603.1, entitled "Video Compression Method and Apparatus, and Computer Readable Storage Medium", filed with the CNIPA on December 05, 2022, the contents of which should be construed as being incorporated herein by reference.

## Technical Field

Embodiments of the present disclosure relate to, but are not limited to, the technical field of video compression, and particularly relate to a video compression method, apparatus and computer-readable storage medium.

## Background

With the continuous development of multimedia information technology, massive video information emerges. As a kind of comprehensive media for expressing information, video data has become an important information carrier in our real life. Video compression is one of key technologies in digital media storage and transmission applications, with a purpose of reducing an amount of data stored and transmitted by eliminating redundant information. At present, mainstream video compression coding standards include H.264/H.265, in which a data rate of a video is mainly determined by an image resolution, frames per second (FPS) and an inter-frame gap (IFG). How to reduce the data rate and improve storage efficiency without reducing video quality is a long-term research direction in fields of video storage and transmission.

## Summary

The following is a summary of the subject matter described in detail herein. This summary is not intended to limit the scope of protection of the claims.

An embodiment of the present disclosure provides a video compression method, including:

acquiring a detection result of a first sensor, and determining a target motion parameter according to the detection result;

determining a video compression parameter according to the determined target motion parameter; and

performing video compression on first video data according to the video compression parameter.

In some exemplary implementations, the first video data is video data captured by an image sensor, and a detection region of the first sensor is overlapped with an image acquisition region of the image sensor.

In some exemplary implementations, the detection region of the first sensor being overlapped with the image acquisition region of the image sensor includes: the detection region of the first sensor is larger than or equal to the image acquisition region of the image sensor.

In some exemplary implementations, the first sensor includes any one or more of a radar sensor, an infrared sensor, and a laser sensor.

In some exemplary implementations, the target motion parameter includes at least one of a quantity of moving targets, sizes of the moving targets, and speeds of the moving targets.

In some exemplary implementations, the video compression parameter is an inter-frame gap.

In some exemplary implementations, when the target motion parameter includes the quantity of the moving targets and the speeds of the moving targets, the determining the video compression parameter according to the target motion parameter includes determining the inter-frame gap according to the quantity of the moving targets and the speeds of the moving targets.

In some exemplary implementations, the determining the inter-frame gap according to the quantity of the moving targets and the speeds of the moving targets includes:

determining that the inter-frame gap is a first gap e1 if the quantity of the moving targets is greater than a first quantity threshold c1 or a speed of at least one of the moving targets is greater than a first speed threshold d1;

determining that the inter-frame gap is a second gap e2 if the quantity of the moving targets is between the first quantity threshold c1 and a second quantity threshold c2, the speed of the at least one moving target is between the first speed threshold d1 and a second speed threshold d2, and the speeds of other moving targets are not greater than the first speed threshold d1;

determining that the inter-frame gap is a third gap e3 if the quantity of the moving targets is between the first quantity threshold c1 and the second quantity threshold c2 and the speeds of all of the moving targets are less than the second speed threshold d2; or the quantity of the moving targets is less than the second quantity threshold c2 and the speeds of all of the moving targets are between the first speed threshold d1 and the second speed threshold d2;

determining that the inter-frame gap is a fourth gap e4 if the quantity of the moving targets is less than the second quantity threshold c2 and greater than 0, and the speeds of all of the moving targets are less than the second speed threshold d2; or

determining that the inter-frame gap is a fifth gap e5 if the quantity of the moving targets is 0;

wherein c1>c2>0, d1>d2>0 and 0<e1≤e2 < e3<e4<e5.

In some exemplary implementations, when the target motion parameter includes the quantity of the moving targets and the speeds of the moving targets, the determining the video compression parameter according to the target motion parameter includes: determining the inter-frame gap according to a weight calculation result x, wherein the weight calculation result x is determined according to the quantity of the moving targets and the speeds of the moving targets.

In some exemplary implementations, the weight calculation result $x = \sum_{i=1}^{count} weight1_i *$ $V_i$+weight2*-count, wherein, $V_i$ is a speed of an i-th moving target, and count is the quantity of the moving targets, $weight1_i$ is a first weight coefficient of the i-th moving target, weight2 is a second weight coefficient, $1 \leq i \leq count$, $weight1_i \geq 0$, $weight2 \geq 0$, and

$weight1 = \sum_{i=1}^{count} weight1_i$, weight1+weight2=1.

In some exemplary implementations, the determining the inter-frame gap according to the weight calculation result x includes dynamically adjusting the inter-frame gap according to a parameter relationship IFG = f(x) between the weight calculation result x and the inter-frame gap, wherein IFG is the inter-frame gap, x is the weight calculation result, and f(x) represents a function with x as an independent variable.

In some exemplary implementations, when the target motion parameter includes the sizes of the moving targets and the speeds of the moving targets, the determining the video compression parameter according to the target motion parameter includes determining the inter-frame gap according to the sizes of the moving targets and the speeds of the moving targets.

In some exemplary implementations, the determining the inter-frame gap according to the sizes of the moving targets and the speeds of the moving targets includes:

determining that the inter-frame gap is a first gap e1 if a size of at least one of the moving targets is greater than a first size threshold f1 or a speed of at least one of the moving targets is greater than a first speed threshold d1;

determining that the inter-frame gap is a second gap e2 if the sizes of all of the moving targets are between the first size threshold f1 and a second size threshold f2, the speed of the at least one of the moving targets is between the first speed threshold d1 and a second speed threshold d2, and speeds of other moving targets are not greater than the first speed threshold d1;

determining that the inter-frame gap is a third gap e3 if the sizes of all of the moving targets are between the first size threshold f1 and the second size threshold f2, and the speeds of all of the moving targets are less than the second speed threshold d2; or the sizes of all of the moving targets are less than the second size threshold f2 and the speeds of all of the moving targets are between the first speed threshold d1 and the second speed threshold d2;

determining that the inter-frame gap is a fourth gap e4 if the sizes of all of the moving targets are less than the second size threshold f2, and the speeds of all of the moving targets are less than the second speed threshold d2; or

determining that the inter-frame gap is a fifth gap e5 if the quantity of the moving targets is 0; wherein f1>f2>0, d1>d2> 0, and 0<e1≤e2<e3<e4<e5.

An embodiment of the present disclosure further provides a video compression apparatus, including: a detection unit, a calculation unit, and a video compression unit, wherein:

the detection unit is configured to acquire a detection result of a first sensor and determine a target motion parameter according to the detection result;

the calculation unit is configured to determine a video compression parameter according to the target motion parameter; and

the video compression unit is configured to perform video compression on first video data according to the video compression parameter.

An embodiment of the present disclosure further provides a video compression apparatus including a memory and a processor;

wherein the memory is configured to store program instructions; and
the processor is configured to invoke the program instructions to implement the video compression method of any embodiment of the present disclosure.

An embodiment of the present disclosure further provides a computer-readable storage medium storing a computer program thereon, the program, wherein when the computer program is executed by a processor, the video compression method according to any embodiment of the present disclosure is implemented.

An embodiment of the present disclosure further provides a video compression apparatus, including a detection unit, a calculation unit, and a video compression unit, wherein:

the detection unit is configured to acquire a detection result of a first sensor and determine a target motion parameter according to the detection result;

the calculation unit is configured to determine a video compression parameter according to the target motion parameter; and

the video compression unit is configured to perform video compression on first video data according to the video compression parameter.

In some exemplary implementations, the target motion parameter includes at least one of: a quantity of moving targets, sizes of the moving targets, and speeds of the moving targets.
In some exemplary implementations, the video compression parameter is an inter-frame gap.
In some exemplary implementations, when the target motion parameter includes the quantity of the moving targets and the speeds of the moving targets, the calculation unit is configured to determine the inter-frame gap according to the quantity of the moving targets and the speeds of the moving targets.
In some exemplary implementations, when the target motion parameter includes the sizes of the moving targets and the speeds of the moving targets, the calculation unit is configured to determine the inter-frame gap according to the sizes of the moving targets and the speeds of the moving targets.
In the video compression method, apparatus and computer-readable storage medium according to the embodiment of the present disclosure, by determining the target motion parameter according to the detection result of the first sensor, determining the video compression parameter according to the target motion parameter, and performing video compression on the first video data according to the video compression parameter, the first sensor can capture dynamic targets, and adjustment of the video compression parameter according to the capture result of the first sensor is guided to duly adjust the video compression parameter and minimize the loss of video quality.
After the drawings and detailed description are read and understood, other aspects can be understood.

**Brief Description of Drawings**

Accompanying drawings are used for providing understanding of technical solutions of the present disclosure, and form a part of the specification. They are used for explaining the technical solutions of the present disclosure together with embodiments of the present disclosure, but do not form a limitation on the technical solutions of the present disclosure.

FIG. 1 is a schematic flow diagram of a video compression method according to an exemplary embodiment of the present disclosure.

FIG. 2 is a schematic diagram of ranges of an image acquisition region of an image sensor and a detection region of a first sensor according to an exemplary embodiment of the present disclosure.

FIG. 3 is a schematic diagram of division of a point set after a radar point cloud is projected to an XZ coordinate system according to an exemplary embodiment of the present disclosure.

FIG. 4 is a schematic diagram of principle for H.264 coding.

FIG. 5 is a schematic diagram of a coding scheme according to an exemplary embodiment of the present disclosure.

FIG. 6A is a schematic diagram of a video storage thread according to an exemplary embodiment of the present disclosure.

FIG. 6B is a schematic diagram of a radar thread according to an exemplary embodiment of the present disclosure.

FIG. 7 is a schematic diagram of a structure of a video compression apparatus according to an embodiment of the present disclosure.

FIG. 8 is a schematic diagram of a structure of another video compression apparatus according to an embodiment of the present disclosure.

## Detailed Description

In order to make purposes, technical solutions and advantages of the present disclosure clearer, the embodiments of the present disclosure will be described in detail below with reference to the accompanying drawings. It should be noted that the embodiments of the present disclosure and features in the embodiments can be combined with each other arbitrarily without a conflict.

Unless otherwise defined, technical terms or scientific terms publicly used in the embodiments of the present disclosure should have usual meaning as understood by those of ordinary skills in the art to which the present disclosure belongs. Wordings "first", "second" or a similar wording used in the embodiments of the present disclosure do not indicate any order, quantity or importance, but are merely used to distinguish different components. Wordings "comprise", "include" or the like mean that an element or item preceding the wording encompasses elements or items enumerated after the wording and their equivalents, and does not exclude other elements or items.

In the H.264/H.265 video compression standard, a data rate of a video is mainly determined by an image resolution, frames per second (FPS) and an inter-frame gap (IFG). After determining a video compression coding scheme, further reducing the data rate to improve storage efficiency is generally achieved by adjusting the inter-frame gap. The wider the inter-frame gap is, the lower the data rate and the higher the storage efficiency. The shorter the inter-frame gap is, the higher the data rate, and the lower the storage efficiency. In the related art, generally the inter-frame gap is adjusted according to application scenarios. For example, for video recording, generally an inter-frame gap of one I frame per second is set to calibrate the video. For network videos, such as a video call, generally lengthen the inter-frame gap to reduce the data rate. However, setting the inter-frame gap in an open-loop control mode simply according to the requirements of the application scenario or the requirements of the data rate will usually reduce a quality of the video and cause image distortion.

An embodiment of the present disclosure provides a video compression method, which can dynamically adjust a video compression ratio according to detection results of other sensors, thereby improving an efficiency of video compression, transmission, or storage.

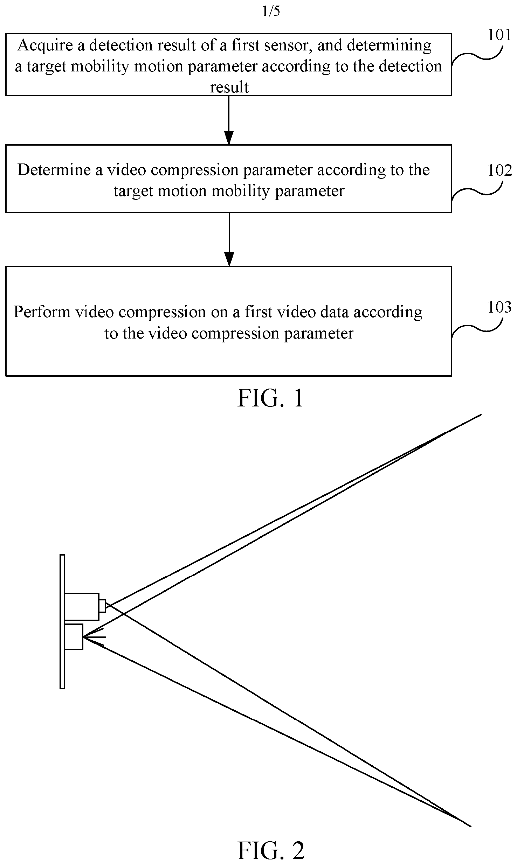

As shown in FIG. 1, an embodiment of the present disclosure provides a video compression method, which includes the following steps:

Step 101: acquiring a detection result of a first sensor, and determining a target motion parameter according to the detection result;

Step 102: determining a video compression parameter according to the target motion parameter; and

Step 103: performing video compression on first video data according to the video compression parameter.

The video compression method according to the embodiment of the present disclosure detects and senses an environment by the first sensor, determines the target motion parameter according to the detection result of the first sensor, determines the video compression parameter according to the target motion parameter, and performs video compression on the first video data according to the video compression parameter. The first sensor can capture dynamic targets, and adjustment of the video compression parameter according to a capture result of the first sensor is guided to duly adjust the video compression parameter and minimize the loss of video quality.

In some exemplary implementations, determining the video compression parameter according to the target motion parameter includes:

determining a current application scenario; and

determining the video compression parameter according to the target motion parameter in combination with the current application scenario.

In the embodiment of the present disclosure, the video compression parameter may be determined according to the target motion parameter (which is determined according to the detection result of the first sensor) in combination with requirement of the current application scenario, thereby the video compression parameter is further adjusted to an optimal configuration and a loss of video quality is minimized.

For example, the application scenario may be live video broadcast, video conference, video surveillance, or the like.

In a scenario of a live video broadcast or a video conference: both the compression ratio and the data rate of the video can be increased when no people are in motion; and both the compression ratio and the data rate of the video can be reduced when there are people in motion.

For a scenario of video surveillance: the compression ratio of the video is greatly increased to reduce storage space for the video when there is no moving target; the video is compressed and saved normally when there is a small quantity of moving targets; and the compression ratio of the video is reduced to ensure the video quality when there are many moving targets.

In some exemplary implementations, the first sensor may include any one or more of a radar sensor, an infrared sensor, a laser sensor etc.

A basic task of a radio detection and ranging (radar) sensor is to detect a target and measure distance, direction and speed of the target. A radar sensor is mainly composed of an antenna, a transmitter, a receiver, and the like. The transmitter of the radar generates sufficient electromagnetic energy to be transmitted to the antenna through a transmit-receive switch. The antenna radiates the electromagnetic energy into the atmosphere, and the electromagnetic energy being concentrated in a narrow direction forms a beam propagating forward. Electromagnetic waves in the beam will be reflected in multiple directions upon encountering a target in the beam, with part of the electromagnetic energy being reflected in a direction back to the radar and acquired by the antenna of the radar to form an echo signal of radar. The receiver processes the echo signal, extracts information contained in the echo signal, and obtains the distance, direction, speed and other information of the target.

An infrared sensor is a sensor that uses infrared rays as medium to achieve a measuring function. Infrared rays, also referred to as infrared light, have properties such as reflection, refraction, scattering, interference and absorption etc. Any substance, as long as it has a certain temperature (above the degree of absolute zero), can radiate infrared rays. Infrared sensors are often used in non-contact temperature measurement, gas composition analysis and non-destructive testing, and are widely used in fields such as medicine, military, space technology and environmental engineering. In addition, infrared technology has been widely used in speed measurement systems, and many products have been able to use infrared technology to realize vehicle speed measurement and vehicle detection, etc.

A laser sensor is a sensor that uses laser technology to perform measurement. The laser sensor can realize a non-contact long-distance measurement by taking advantages of high directivity, high monochromaticity and high brightness of the laser. Laser sensors are often used in measurement of physical quantities such as length, distance, vibration, speed, azimuth, etc., and can also be used for flaw detection and monitoring of air pollutants.

In some exemplary implementations, the first sensor may be a Radar sensor, optionally a millimeter wave Radar sensor using millimeter waves. Millimeter waves usually refer to waves in a frequency domain of 30GHz to 300 GHz (a wavelength domain of 1mm to 10 mm). A wavelength of a millimeter wave is between a wavelength of a centimeter wave and a wavelength of a light wave, so the millimeter wave has advantages of both microwave guidance and photoelectric guidance. Compared with a centimeter wave Radar, a millimeter wave Radar has characteristics of small size, easy integration and high spatial resolution. Compared with optical sensors such as a camera, an infrared sensor and a laser sensor, a millimeter-wave Radar has a strong capability of penetrating through fog, smoke, and dust, a strong anti-interference capability, and are available for all-weather (except for heavy rain) and all-day.

In some exemplary implementations, the first sensor may be a Frequency Modulated Continuous Wave (FMCW) Radar sensor. Compared with other radar sensors for ranging and speed measurement, a structure of the FMCW Radar sensor is simpler. In the embodiment of the present disclosure, excellent performance of the FMCW Radar sensor in dynamic target capture can be utilized to duly guide adjustment of the video compression parameter according to the application scenario and the capture result of the Radar, thereby minimizing loss of the video quality.

In an embodiment of the present disclosure, one or more first sensors may be provided, and each first sensor is configured to perform target detection in one detection region, and a plurality of first sensors may perform the target detection in a cooperative detection mode. Here, types of the plurality of first sensors may be the same or different, for example, two first sensors include an infrared sensor and a Radar sensor, or two first sensors include an image sensor and a Radar sensor, and so on.

In some exemplary implementations, the first video data is video data captured by an image sensor, and the detection region of the first sensor is overlapped with an image acquisition region of the image sensor.

In an embodiment of the present disclosure, the detection region of the first sensor and the image acquisition region of the image sensor may be completely overlapped or partially overlapped.

In an embodiment of the present disclosure, the detection region of the first sensor and the image acquisition region of the image sensor being partially overlapped includes the following two cases: (1) the detection region of the first sensor is larger than the image acquisition region of the image sensor (which can also be understood as that the detection region of the first sensor contains the image acquisition region of the image sensor, or the detection region of the first sensor covers the image acquisition region of the image sensor); (2) the detection region of the first sensor is smaller than the image acquisition region of the image sensor (which can also be understood as that the detection region of the first sensor is located within the image acquisition region of the image sensor).

In some exemplary implementations, the detection region of the first sensor being overlapped with the image acquisition region of the image sensor includes: the detection region of the first sensor is larger than or equal to the image acquisition region of the image sensor.

In an embodiment of the present disclosure, the detection region of the first sensor being larger than or equal to the image acquisition region of the image sensor may refer to that an angle of field of view of the detection region of the first sensor is larger than or equal to an angle of field of view of the image acquisition region of the image sensor, and the embodiment of the present disclosure is not limited thereto.

In some exemplary implementations, when the detection region of the first sensor is larger than the image acquisition region of the image sensor, redundant detection region may be filtered out by software.

In some exemplary implementations, when the detection region of the first sensor is smaller than the image acquisition region of the image sensor, a plurality of first sensors may be used to work in parallel, with a sum of detection regions of the plurality of first sensors being larger than or equal to the image acquisition region of the image sensor. The detection region of the first sensor may be increased by the plurality of first sensors working in parallel.

In some other exemplary implementations, when the detection region of the first sensor is smaller than the image acquisition region of the image sensor, a physical rotation apparatus may be added to the first sensor to increase a detection angle of the first sensor by physical rotation, thereby increasing the detection region of the first sensor.

In an embodiment of the present disclosure, when the detection region of the first sensor is smaller than the image acquisition region of the image sensor, a plurality of first sensors may be used to work in parallel, or a physical detection range of the first sensor may be increased by physical rotation. For example, if the first sensor is a Radar and there are three Radars working in parallel, then a cooperative (combined) detection region of the three Radars is larger than or equal to the image acquisition region of the image sensor. The detection region of the first sensor is larger than or equal to the image acquisition region of the image sensor, so as to enable the first sensor to detect whether there are moving targets in the image acquisition region and determine the quantity, speeds and sizes etc., of the moving targets. When the detection region of the first sensor is smaller than the image acquisition region of the image sensor, there may be some blind regions, thus a judgment accuracy of the first sensor on the moving targets in the image acquisition region will be affected.

In some exemplary implementations, the image sensor may be a video capturing device such as an independent camera or a client device having a video capturing function.

In an embodiment of the present disclosure, when a plurality of first sensors are provided, the image acquisition region of the image sensor being smaller than or equal to the detection region of the first sensor may refer to that the image acquisition region of the image sensor is a subset of a cooperative detection region of the plurality of first sensors.

In some exemplary implementations, the image acquisition region of the image sensor being a subset of the detection region of the first sensor may refer to that the detection region of the first sensor is larger than or equal to the image acquisition region of the image sensor. That is, the detection region of the first sensor contains the image acquisition region of the image sensor.

For example, it is assumed that the video compression method according to the embodiment of the present disclosure adopts one first sensor and one image sensor, and as shown in FIG. 2, and it is assumed that the detection region of the first sensor is equal to the image acquisition region of the image sensor.

In some exemplary implementations, both the detection region of the first sensor and the image acquisition region of the image sensor may vary over time, as long as the detection region of the first sensor is larger than or equal to the image acquisition region of the image sensor during the process of varying.

In some exemplary implementations, the target motion parameter includes at least one of the following:

the quantity of moving targets, sizes of the moving targets and speeds of the moving targets.

In an embodiment of the present disclosure, determining the video compression parameter according to the target motion parameter may include any one of the following situations:

determining the video compression parameter only according to the quantity of the moving targets;

determining the video compression parameter only according to the sizes of the moving targets;

determining the video compression parameter only according to the speeds of the moving targets;

determining the video compression parameter according to the quantity of the moving targets and the sizes of the moving targets;

determining the video compression parameter according to the sizes of the moving target and the speeds of the moving targets;

determining the video compression parameter according to the quantity of the moving targets and the speeds of the moving targets; and

determining the video compression parameter according to the quantity of the moving targets, the sizes of the moving targets and the speeds of the moving targets.

In an embodiment of the present disclosure, a size of a moving target may refer to a volume of the moving target or an area of a cross-section of the moving target projected onto a certain direction. For example, an area of the cross-section of the moving target projected onto a certain direction may be an area of the cross-section of the moving target projected onto the XZ coordinate system or the YZ coordinate system, or a Radar cross-section (RCS) area, or the like. Here, the RCS area is a measure of a target's capability of reflecting Radar signals in a reception direction of the Radar, and RCS area of a target is equal to a ratio of power reflected by a unit solid angle target toward a reception antenna of the Radar to a density of power incident on the target (per square meter).

In some exemplary implementations, when the first sensor is a Radar sensor, the detection result of the first sensor is a Radar points cloud, with each point in the Radar points cloud having its respective speed and three-dimensional coordinate information according to a Radar ranging and speed measurement algorithm, and determining the target motion parameter according to the detection result includes:

performing data pre-processing on the Radar points cloud;

dividing points having a speed greater than 0 into one or more point sets, wherein a speed difference between every two points in each point set is less than or equal to a m/s, with a being a real number greater than or equal to 0 and less than or equal to 0.5; and

determining the quantity of the moving targets according to a quantity of point sets, and determining sizes of the moving targets according to sizes of regions occupied by the point sets (which may be areas of two-dimensional point sets or volumes of three-dimensional point sets).

In some exemplary implementations, performing the data pre-processing on the Radar point cloud includes eliminating noise points in the Radar point cloud by Kalman filtering.

Kalman Filtering is an algorithm that uses a linear system state equation to determine an optimal estimation for system state through input and output observation data of the system. An optimal estimation can also be regarded as a filtering process because the observation data is influenced by noises and interferences in the system.

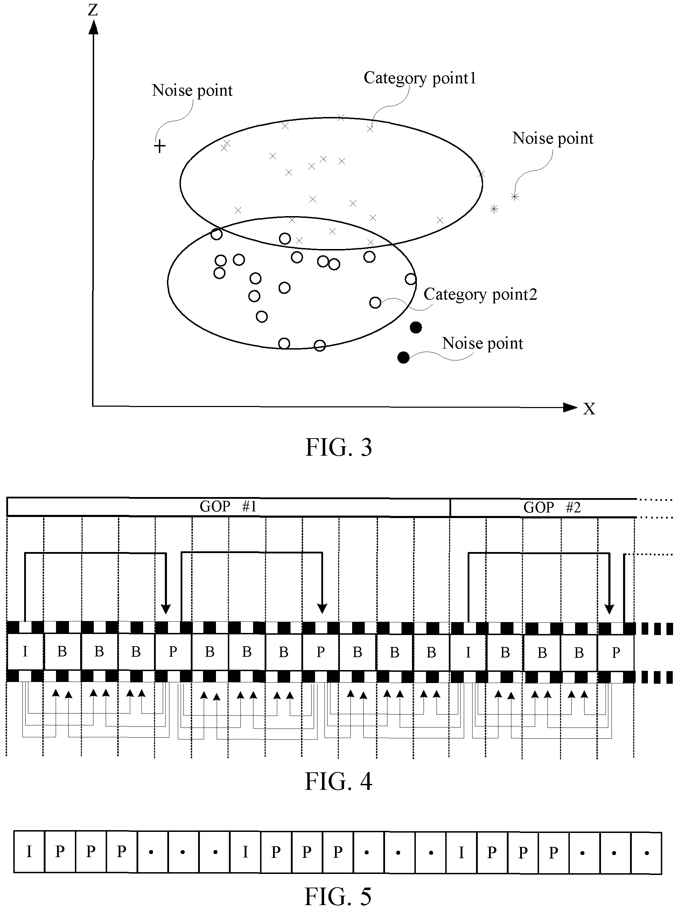

In some exemplary implementations, before determining the quantity of the moving targets according to the quantity of the point sets, the method further includes: filtering out point sets in which a quantity of points is less than b, wherein b is a natural number greater than 0 and less than 6. For example, b = 3 as shown in FIG. 3, when a quantity of points in a certain point set is less than 3, the points in this point set will also be regarded as noise points and be eliminated to further reduce influence of noises and interferences in the system.

In some exemplary implementations, a size of each moving target may be determined by: calculating an area occupied by each point set according to a method of calculating an area of a minimum circle occupied by multiple points on a plane; calculating an area occupied by each point set according to a method of calculating an area of a polygon occupied by multiple points on a plane; or calculating a 3D volume occupied by a point set. The embodiment of the present disclosure is not limited thereto. When calculating the area occupied by each point set, a point set in a three-dimensional space may be projected onto a two-dimensional coordinate system for calculation. For example, each point set may be projected onto the XZ coordinate system for calculation, or each point set may be projected onto the YZ coordinate system for calculation.

In some exemplary implementations, determining the target motion parameter according to the acquired detection result includes:

eliminating noise points in the Radar point cloud by Kalman filtering;

filtering out all points with a speed of 0 (i.e. static target points);

dividing points having a speed greater than 0 into one or more point sets, wherein a speed difference between every two points in each point set is less than or equal to a m/s, with a being a real number greater than or equal to 0 and less than or equal to 0.5;

filtering out point sets in which a quantity of points is less than b, and determining the quantity of the moving targets according to a quantity of point sets remained after the filtering process, wherein b is a natural number greater than 0 and less than 6; and

calculating an area or a volume of each point set, and determining a size of each moving target according to the determined area or volume.

In some exemplary implementations, after determining the area or volume of each point set, the method further includes: comparing the determined area or volume with a predefined area threshold or volume threshold; determining all points in the point set as one moving target if the determined area or volume is greater than or equal to the predefined area threshold or volume threshold; and eliminating the points in the point set as noise points if the determined area or volume is less than the predefined area threshold or volume threshold. This can further improve accuracy of judgment result.

Optionally, the video compression method may be a video compression method based on H.264 standard or H.265 standard. However, the embodiment of the present disclosure is not limited thereto, and the video compression method may be a video compression method based on a video compression standard other than the H.264 standard or the H.265 standard, for example, may be a video compression method based on the series of standards of the Moving Picture Experts Group (MPEG), etc.

H.264 is a coding standard for compressing video proposed by the Video Coding Expert Group. H.264 is a new generation of digital video compression format following MPEG4. H.265 is a new video coding standard developed after H.264. The H.265 standard is based on the H.264 video coding standard, retaining some original technologies and improving some technologies, so as to improve the relationship among data rate, coding quality, delay and algorithm complexity, and achieve an optimal configuration.

In an H.264/H.265 video compressing method, a picture to be compressed and saved is divided into an I frame, a P frame and a B frame, and a basic principle of which is to divide the picture into 16 * 16 (or another size) pixel blocks, and complete the compression based on previous and subsequent pictures. The P frame and B frame are relatively small, and the I frame is relatively large and is used to calibrate the video every for each time interval to prevent video image distortion.

As shown in FIG. 4, taking the H.264 video compression technology as an example, a basic principle and technical parameters of video compression are illustrated as follows:

A frame compressed by the H.264 video compression technology is divided into a I frame, a P frame and a B frame, wherein:

I frame: a Key frame/must frame using intra-frame compression technology.

P frame: a forward reference frame/optional frame, which only refers to a previously processed frame and uses intra-frame compression technology for compression.

B frame: a bidirectional reference frame/optional frame, which refers to both the previous frame and a subsequent frame, and uses inter-frame compression technology for compression.

A group of pictures (GoP) is provided between two I frames, and a quantity of frames between the two I frames is called an inter-frame gap (IFG). Setting the IFG appropriately can economize date rate and improve a video storage quality.

In some exemplary implementations, the video compression parameter may include an inter-frame gap (IFG). However, embodiments of the present disclosure are not limited thereto. In some other exemplary implementations, the video compression parameter may further include video compression parameters other than the IFG, such as frame coding mode (using progressive coding or interlaced coding), resolution, frame rate, or the like.

The video compression method according to the embodiment of the present disclosure uses first sensor to capture dynamic targets (which can also be understood as moving targets), guides the adjustment of the inter-frame gap according to the capture result of the first sensor, and duly adjusts the inter-frame gap to minimize the loss of video quality. For example, the dynamic target may be a pedestrian, a sweeping robot in operation, a traveling vehicle, or the like.

The video compression method according to the embodiment of the present disclosure can be applied to the video surveillance industry, where the first sensor may be a Radar sensor. When the Radar sensor detects a dynamic target, the video compression ratio can be dynamically adjusted according to the dynamic target, and when no dynamic target is detected by the Radar sensor, the video compression ratio are not adjusted or slightly adjusted, which can greatly save storage space for video data or reduce a video transmission bandwidth.

In some exemplary implementations, when the target motion parameter includes the quantity of the moving targets and the speeds of the moving targets, the determining the video compression parameter according to the target motion parameter includes determining the inter-frame gap according to the quantity of the moving targets and the speeds of the moving targets.

In some exemplary implementations, determining the inter-frame gap according to the quantity of the moving targets and the speeds of the moving targets includes:

determining that the inter-frame gap is a first gap $e_1$ if the quantity of the moving targets is greater than a first quantity threshold $c_1$ or a speed of at least one moving target is greater than a first speed threshold $d_1$;

determining that the inter-frame gap is a second gap $e_2$ if the quantity of the moving targets is between the first quantity threshold $c_1$ and a second quantity threshold $c_2$, the speed of at least one moving target is between the first speed threshold $d_1$ and a second speed threshold $d_2$, and speeds of other moving targets are not greater than the first speed threshold $d_1$;

determining that the inter-frame gap is a third gap $e_3$ if the quantity of the moving targets is between the first quantity threshold $c_1$ and the second quantity threshold $c_2$ and the speeds of all of the moving targets are less than the second speed threshold $d_2$; or the quantity of the moving targets is less than the second quantity threshold $c_2$ and the speeds of all of the moving targets are between the first speed threshold $d_1$ and the second speed threshold $d_2$;

determining that the inter-frame gap is a fourth gap $e_4$ if the quantity of the moving targets is less than the second quantity threshold $c_2$ and greater than 0, and the speeds of all of the moving targets are less than the second speed threshold $d_2$;

determining that the inter-frame gap is a fifth gap $e_5$ if the quantity of the moving targets is 0, wherein $c_1 > c_2 > 0$, $d_1 > d_2 > 0$, and $0 < e_1 \leq e_2 < e_3 < e_4 < e_5$.

The above embodiment is described by taking five inter-frame gaps from $e_1$ to $e_5$ or four inter-frame gaps (when $e_1 = e_2$) as an example. However, the embodiment of the present disclosure is not limited thereto, and in some other exemplary implementations, types of the inter-frame gaps may be defined as required, for example, three or six types of inter-frame gaps may be defined, and so on.

In an embodiment of the present disclosure, the inter-frame gap may be expressed by a quantity $e$ of frames between two adjacent I frames, or may be expressed by a time interval $e\_t$ between two adjacent I frames. Assuming that the unit of $e\_t$ is ms, the quantity $e$ of frames between two adjacent I frames and the time interval $e\_t$ between the two adjacent I frames may be converted to each other by the following formula:

$e\_t = e * (1000/fps)$, where fps is a frame rate, that is, a quantity of frames transmitted per second.

For example, if that the inter-frame gap is expressed by the quantity $e$ of frames between two adjacent I frames, both $e_1$ and $e_2$ may be 10 frames, $e_3$ may be 30 frames, $e_4$ may be 90 frames, and $e_5$ may be 1800 frames. However, the embodiments of the present disclosure are not limited thereto, and numerical values of $e_1$ to $e_5$ may be set as required.

For example, $c_1 = 5$, $d_1 = 3$ m/s, $c_2 = 2$, and $d_2 = 1$ m/s. However, the embodiments of the present disclosure are not limited thereto, and the numerical values of $c_1$ to $c_2$ and $d_1$ to $d_2$ may be set as required.

In some exemplary implementations, when the target motion parameter includes the quantity of the moving targets and the speeds of the moving targets, the determining the video compression parameter according to the target motion parameter includes:

determining the inter-frame gap according to a weight calculation result $x$, wherein the weight calculation result $x$ is determined according to the quantity of the moving targets and the speeds of the moving targets.

In an embodiment of the present disclosure, when the target motion parameter includes the quantity of the moving targets and the speeds of the moving targets, different weights may be set for the quantity of the moving targets and the speeds of the moving targets, and the video compression parameter may be determined according to a weight calculation result.

In some exemplary implementations, the weight calculation result x may be set as $x = \sum_{i=1}^{count} weight1_i * V_i + weight2 * count$, wherein $V_i$ is a speed of an i-th moving target, and count is the quantity of the moving targets, weight1$_i$ is a first weight coefficient of the i-th moving target, weight2 is a second weight coefficient, $1 \leq i \leq count$, weight1$_i \geq 0$, weight2 $\geq 0$, and $weight1 = \sum_{i=1}^{count} weight1_i$, weight1+weight2=1. For example, weight1=0.8 and weight2=0.2.

In some exemplary implementations, the first weight coefficient of each moving target may be set according to a volume of each moving target or an area of a cross-section projected by the moving target along a certain direction. However, the embodiments of the present disclosure are not limited thereto.

In some exemplary implementations, the first weight coefficients of all moving targets are equal. Here, the weight calculation result x may be set as $x = \sum_{i=1}^{count} weight1 * V_i + weight2 *$ count, wherein, $V_i$ is the speed of the i-th moving target, count is the quantity of the moving targets, weight1 is the first weight coefficient, weight2 is the second weight coefficient, $1 \leq i \leq count$, weight1 $\geq 0$, weight2 $\geq 0$, and weight1+weight2=1.

For example, the speeds of the moving targets V are divided into the following three levels of values: 1 (the speeds of the moving targets are lower than 1 m/s), 2 (the speeds of the moving targets are higher than 1 m/s and lower than 3 m/s), and 3 (the speeds of the moving targets are higher than 3 m/s). The quantity of the moving targets count is divided into the following three levels of values: 1 (the quantity of the moving targets < 2), 2 ($2 \leq$ the quantity of the moving targets $\leq 5$), and 3 (the quantity of the moving targets>5). Determining the video compression parameter according to the weight calculation result may include: determining that the inter-frame gap is a sixth gap g1 if x>2, determining that the inter-frame gap is a seventh gap g2 if 1<x$\leq$2, and determining that the inter-frame gap is an eighth gap g3 if x = 1, where g 1 <g2<g3.

In some exemplary implementations, determining the inter-frame gap according to the weight calculation result x includes:

dynamically adjusting the inter-frame gap according to a parameter relationship between the weight calculation result x and the inter-frame gap, the parameter relationship may be IFG = f(x), wherein IFG is the inter-frame gap, x is the weight calculation result, and f(x) represents a function with x as an independent variable.

In some exemplary implementations, determining the video compression parameter according to the weight calculation result includes dynamically and continuously adjusting the IFG according to a parameter relationship between the weight calculation result and the inter-frame gap (IFG). For example, the parameter relationship between the weight calculation result and the inter-frame gap (IFG) may be: IFG = [m*x], where m is an adjusting coefficient, x is the weight calculation result, and [] is a rounding symbol (which may be rounding up to an integer, rounding down to an integer, rounding to the nearest integer, etc.).

In an embodiment of the present disclosure, f(x) may be a simple coefficient relationship or a relatively complex function relationship, which is generally obtained through sensitivity tests to weights for the application industry. For example, the live video industry has an ordinary sensitivity to weights and the parameter relationship may be set as IFG=k*x, where k is a positive number. Or, for the video surveillance industry, different weights are expected to produce compression ratios with large differences and the parameter relationship may be set as IFG=k*x$^2$, with k being a positive number.

In some exemplary implementations, when the target motion parameter includes the sizes of the moving targets and the speeds of the moving targets, determining the video compression parameter according to the target motion parameter includes:

determining the inter-frame gap according to the sizes of the moving targets and the speeds of the moving targets.

In some exemplary implementations, determining the inter-frame gap according to the sizes of the moving targets and the speeds of the moving targets includes:

determining that the inter-frame gap is a first gap e1 if: a size of at least one of the moving targets is greater than a first size threshold f1 or a speed of at least one of the moving targets is greater than a first speed threshold d1;

determining that the inter-frame gap is a second gap e2 if: the sizes of all of the moving targets are between the first size threshold f1 and a second size threshold f2, the speed of the at least one of the moving targets is between the first speed threshold d1 and a second speed threshold d2, and speeds of other moving targets are not greater than the first speed threshold d1;

determining that the inter-frame gap is a third gap e3 if: the sizes of all of the moving targets are between the first size threshold f1 and the second size threshold f2, and the speeds of all of the moving targets are less than the second speed threshold d2; or the sizes of all of the moving targets are less than the second size threshold f2 and the speeds of all of the moving targets are between the first speed threshold d1 and the second speed threshold d2;

determining that the inter-frame gap is a fourth gap e4 if the sizes of all of the moving targets are less than the second size threshold f2, and the speeds of all of the moving targets are less than the second speed threshold d2; and

determining that the inter-frame gap is a fifth gap e5 if the quantity of the moving targets is 0, wherein f1>f2>0, d1>d2>0, and 0<e1≤e2<e3<e4<e5.

The above embodiment is described by taking five inter-frame gaps from e1 to e5 or four inter-frame gaps (when e1 = e2) as an example. However, the embodiment of the present disclosure is not limited thereto, and in some other exemplary implementations, types of inter-frame gaps may be defined as required, for example, three or six types of inter-frame gaps may be defined.

For example, e1 and e2 are each 10 frames, e3 is 30 frames, e4 is 90 frames, and e5 is 1800 frames. However, the embodiments of the present disclosure are not limited thereto, and numerical values of e1 to e5 may be set as required.

Illustratively, $f1 = 5m^2$, $d1 = 3m/s$, $f2 = 2m^2$, and $d2 = 1 m/s$. However, the embodiments of the present disclosure are not limited thereto, and the numerical values of f1 to f2 and d1 to d2 may be set as required.

In some exemplary implementations, when the target motion parameter includes the sizes of the moving targets and the speeds of the moving targets, different weights may be set for the sizes of the moving targets and the speeds of the moving targets, and the video compression parameter may be determined according to a weight calculation result. For example, the weight calculation result x may be $x = \sum_{i=1}^{count} weight1 * S_i + weight2 * count$, wherein $S_i$ is an area of an i-th moving target, and count is the quantity of the moving targets, weight1 is a first weight coefficient, weight2 is a second weight coefficient, $1 \le i \le count$, $weight1 \ge 0$, $weight2 \ge 0$, and $weight1 + weight2 = 1$. For example, weight1=0.8 and weight2=0.2.

For example, areas of the moving targets S are divided into the following three levels of values: 1 (the areas of the moving targets are smaller than $2m^2$), 2 (the areas of the moving targets are larger than $2m^2$ and smaller than $5m^2$), and 3 (the areas of the moving targets are larger than $5m^2$). The quantity of the moving targets count is divided into the following three levels of value: 1 (the quantity of the moving targets<2), 2 (2≤the quantity of the moving targets≤5), and 3 (the quantity of the moving targets>5). Determining the video compression parameter according to the weight calculation result may include: determining that the inter-frame gap is a sixth gap g1 if x>2, determining that the inter-frame gap is a seventh gap g2 if 1<x≤2, and determining that the inter-frame gap is an eighth gap g3 if x = 1, where g1<g2<g3.

In some exemplary implementations, determining the video compression parameter according to the weight calculation result includes dynamically adjusting the inter-frame gap according to a parameter relationship between the weight calculation result and the inter-frame gap (IFG). For example, the parameter relationship between the weight calculation result and the inter-frame gap (IFG) may be: IFG =[m*x], where m is an adjusting coefficient, x is the weight calculation result, and [] is a rounding symbol (which may be rounding up to an integer, rounding down to an integer, or rounding to the nearest integer, etc.).

In some other exemplary implementations, the target motion parameter may also include the sizes of moving targets and the quantity of the moving targets, and the method of determining the video compression parameter according to the determined target motion parameter may refer to the above description, which will not be repeated in the embodiment of the present disclosure.

As shown in FIG. 5, for convenience of description, a video compression method according to an embodiment of the present disclosure is illustratively described below by taking an example in which a video stream has a quantity of frames transmitted per second (i.e., FPS) of 30 and uses a combination of I frames + P frames to realize video compression.

Optionally, the video compression method according to the embodiment of the present disclosure includes the following steps:

S1: Physically binding a Radar module (i.e., the first sensor) and a video acquisition module (i.e., the image sensor), and calibrating and binding a detection sector of the Radar module and a detection sector of the video acquisition module to make the detection sectors consistent, as shown in FIG. 2.

While using the video compression method according to the embodiment of the present disclosure, it is required to determine the video compression parameter of video data according to a detection result of the first sensor. Therefore, this step calibrates and binds the detection sector of the Radar module and the detection sector of the video acquisition module to make them consistent.

S2: Creating an H.264 encoder, and setting the GoP to be open (in some other embodiments, the GoP may also be set to be closed), wherein IFG is adjustable.

S3: Creating a method of adjusting the IFG:

defining four values for the inter-frame gap: high (IFG_H = 10), medium (IFG_M = 30), low (IFG_L = 90), and extremely low (IFG_LL = 1800) for adjusting the inter-frame gap in S2. That is, IFG is adjustable, and the value of IFG is selected according the Radar module's perception to environment, i.e., the quantity of the moving targets and the speeds of the moving targets, with a correspondence as follows:

(the quantity of the moving targets>5) | (speed of at least one moving target>3 m/s)->IFG_H;

(the quantity of the moving targets>2) & (1 m/s<speed of at least one moving target<3m/s, and speeds of other moving targets are not greater than 3 m/s)->IFG_H;

(the quantity of the moving targets<2) & (speeds of all moving targets<1 m/s)->IFG_L;

Other situations in which moving target exists->IFG_M;

No moving target->IFG_LL.

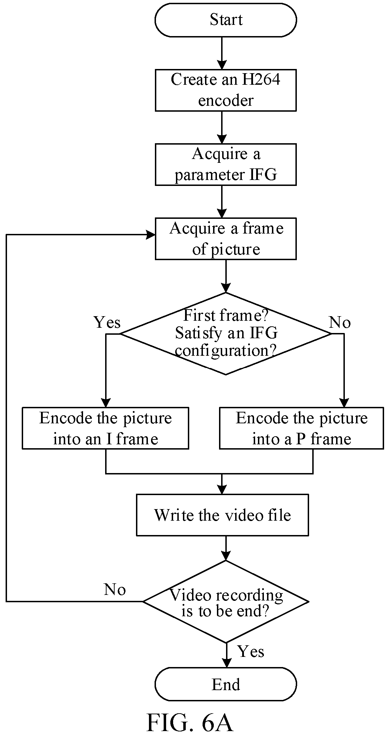

S4: As shown in FIG. 6A, a video storage thread is initiated to receive picture information acquired by the video acquisition module, and compress and store the video. The current picture is encoded into a new I frame when it is a picture of a first frame or its gap from a previous I frame satisfies an IFG configuration. Otherwise, the current picture is encoded into a new P frame (this embodiment only takes the combination of I frame + P frame as an example for illustrative description, and in actual use, the current picture may be encoded into an I frame, a P frame, or a B frame).

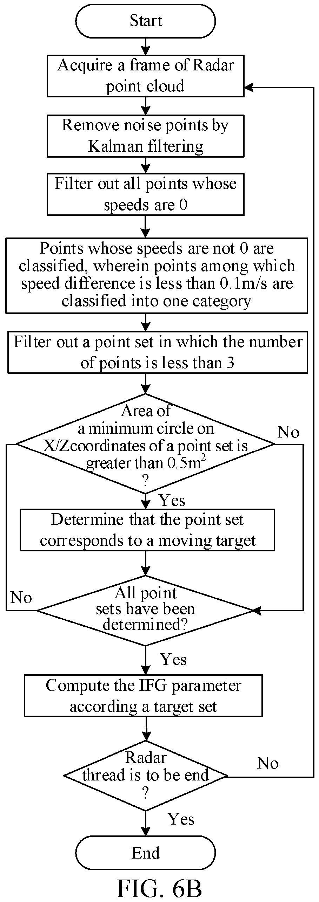

As shown in FIG. 6B, a Radar thread is initiated for detecting environmental targets and detecting the quantity of the moving targets and the speeds of the moving targets. Optionally, the Radar thread includes the following steps: acquiring one frame of a radar point cloud, and eliminating noise points in the Radar point cloud by Kalman filtering; filtering out all points whose speed is 0 (i.e., static target points); dividing points whose speeds are not 0 into one or more point sets, with a difference between every two points in each point set being less than or equal to 0.1 m/s; filtering out point sets whose quantity of points is less than 3; projecting each point set onto the XZ coordinate system to determine an area of a minimum circle of the point set; determining if an area of a minimum circle of each point set is greater than $0.5\,m^2$, determining that the point set corresponds to a moving target if the area of the minimum circle of the point set is greater than $0.5\,m^2$, and filtering out the point set as noise points when the area of the minimum circle of the point set is not greater than $0.5\,m^2$; determining the quantity of the moving targets according to the quantity of point sets remained after the filtering; based on the determined quantity of the moving targets (or sizes of the moving targets) and the speeds of the moving target, adjusting the parameter IFG according to the rules in S3, therefore realizing the adjustment of video compression strategy through Radar environmental monitoring.

In an embodiment of the present disclosure, the parameter IFG may be a shared memory parameter, and both the video storage thread and the Radar thread can access and modify the parameter IFG.

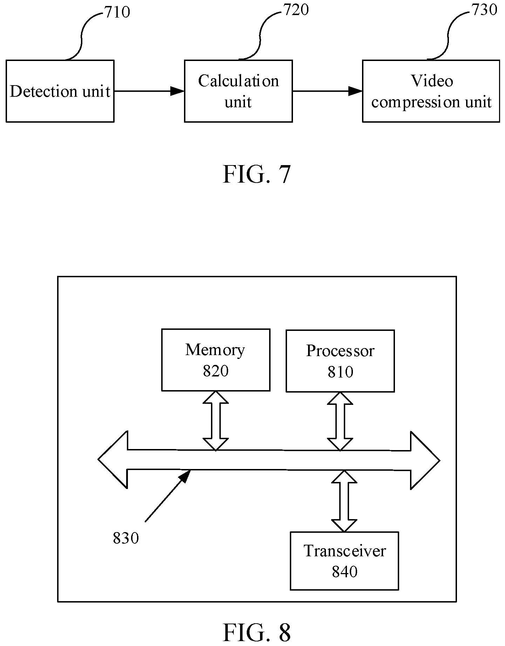

As shown in FIG. 7, an embodiment of the present disclosure further provides a video compression apparatus, including a detection unit 710, a calculation unit 720, and a video compression unit 730, wherein:

the detection unit 710 is configured to acquire a detection result of a first sensor and determine a target motion parameter according to the detection result;

the calculation unit 720 is configured to determine a video compression parameter according to the target motion parameter; and

the video compression unit 730 is configured to perform video compression on first video data according to the video compression parameter.

In some exemplary implementations, the first video data may be video data captured by an image sensor, and a detection region of the first sensor is overlapped with an image acquisition region of the image sensor.

In an embodiment of the present disclosure, the detection region of the first sensor and the image acquisition region of the image sensor may be completely overlapped or partially overlapped.

In an embodiment of the present disclosure, the detection region of the first sensor and the image acquisition region of the image sensor are partially overlapped, including the following two cases: (1) the detection region of the first sensor is larger than the image acquisition region of the image sensor (this can also be understood as that the detection region of the first sensor includes the image acquisition region of the image sensor, or the detection region of the first sensor covers the image acquisition region of the image sensor); (2) the detection region of the first sensor is smaller than the image acquisition region of the image sensor (this can also be understood as that the detection region of the first sensor is located within the image acquisition region of the image sensor).

In some exemplary implementations, when the detection region of the first sensor is larger than the image acquisition region of the image sensor, redundant detection region may be filtered out by software.

In some exemplary implementations, when the detection region of the first sensor is smaller than the image acquisition region of the image sensor, a plurality of first sensors may be used to work in parallel, with a sum of detection regions of the plurality of first sensors being larger than or equal to the image acquisition region of the image sensor. The detection region of the first sensor may be increased by the plurality of first sensors working in parallel.

In some other exemplary implementations, when the detection region of the first sensor is smaller than the image acquisition region of the image sensor, a physical rotation apparatus may be added to the first sensor to increase a detection angle of the first sensor by physical rotation, thereby increasing the detection region of the first sensor.

In some exemplary implementations, the first sensor may include any one or more of a radar sensor, an infrared sensor, and a laser sensor.

In some exemplary implementations, the target motion parameter includes at least one of the following: a quantity of moving targets, sizes of the moving targets and speeds of the moving targets.

In some exemplary implementations, the video compression parameter is an inter-frame gap.

In some exemplary implementations, when the target motion parameter includes the quantity of the moving targets and the speeds of the moving targets, the calculation unit 720 is configured to determine the inter-frame gap according to the quantity of the moving targets and the speeds of the moving targets.

In some exemplary implementations, determining the inter-frame gap according to the quantity of the moving targets and the speeds of the moving targets includes:

determining that the inter-frame gap is a first gap e1 if the quantity of the moving targets is greater than a first quantity threshold c1 or a speed of at least one moving target is greater than a first speed threshold d1;

determining that the inter-frame gap is a second gap e2 if the quantity of the moving targets is between the first quantity threshold c1 and a second quantity threshold c2, the speed of the at least one moving target is between the first speed threshold d1 and a second speed threshold d2, and speeds of other moving targets are not greater than the first speed threshold d1;

determining that the inter-frame gap is a third gap e3 if the quantity of the moving targets is between the first quantity threshold c1 and the second quantity threshold c2 and the speeds of all of the moving targets are less than the second speed threshold d2; or the quantity of the moving targets is less than the second quantity threshold c2 and the speeds of all of the moving targets are between the first speed threshold d1 and the second speed threshold d2;

determining that the inter-frame gap is a fourth gap e4 if the quantity of the moving targets is less than the second quantity threshold c2 and greater than 0, and the speeds of all of the moving targets are less than the second speed threshold d2;

determining that the inter-frame gap is a fifth gap e5 if the quantity of the moving targets is 0, wherein c1>c2>0, d1>d2>0, and $0<e1 \leq e2<e3<e4<e5$.

In some exemplary implementations, when the target motion parameter includes the quantity of the moving targets and the speeds of the moving targets, the calculation unit 720 is configured to:
determining the inter-frame gap according to a weight calculation result x, wherein the weight calculation result x is determined according to the quantity of the moving targets and the speeds of the moving targets.

In some exemplary implementations, the weight calculation result $x = \sum_{i=1}^{count} weight1_i * V_i + weight2*$ count, wherein, $V_i$ is a speed of an i-th moving target, and count is the quantity of the moving targets, $weight1_i$ is a first weight coefficient of the i-th moving target, weight2 is a second weight coefficient, $1 \leq i \leq count$, $weight1 \geq 0$, $weight2 \geq 0$,

$$weight1 = \sum_{i=1}^{count} weight1_i$$
, and weight 1+weight2=1.

In some exemplary implementations, the first weight coefficient of each moving target may be set according to a volume of each moving target or an area of the moving target projected onto a certain cross-section. However, the embodiments of the present disclosure are not limited thereto.

In some exemplary implementations, first weight coefficients of all moving targets are equal. Here, the weight calculation result x may be $x = \sum_{i=1}^{count} weight1 * V_i + weight2 * count$, wherein $V_i$ is a speed of an i-th moving target, count is the quantity of the moving targets, weight1 is a first weight coefficient, weight2 is a second weight coefficient, $1 \leq i \leq count$, $weight1 \geq 0$, $weight2 \geq 0$, and $weight1 + weight2 = 1$.

In some exemplary implementations, determining the inter-frame gap according to the weight calculation result x includes:

dynamically adjusting the inter-frame gap according to a parameter relationship IFG = f(x) between the weight calculation result x and the inter-frame gap, wherein IFG is the inter-frame gap, x is the weight calculation result, and f(x) represents a function with x as an independent variable.

In some exemplary implementations, the target motion parameter includes the sizes of the moving targets and the speeds of the moving targets, and the calculation unit 720 is configured to determine the inter-frame gap according to the sizes of the moving targets and the speeds of the moving targets.

In some exemplary implementations, determining the inter-frame gap according to the sizes of the moving targets and the speeds of the moving targets includes:

determining that the inter-frame gap is a first gap e1 if the size of at least one of the moving targets is greater than a first size threshold f1 or a speed of at least one of the moving targets is greater than a first speed threshold d1;

determining that the inter-frame gap is a second gap e2 if the sizes of all of the moving targets are between the first size threshold f1 and a second size threshold f2, the speed of the at least one of the moving targets is between the first speed threshold d1 and a second speed threshold d2, and the speeds of other moving targets are not greater than the first speed threshold d1;

determining that the inter-frame gap is a third gap e3 if the sizes of all of the moving targets are between the first size threshold f1 and the second size threshold f2, and the speeds of all of the moving targets are less than the second speed threshold d2; or the sizes of all of the moving targets are less than the second size threshold f2 and the speeds of all of the moving targets are between the first speed threshold d1 and the second speed threshold d2;

determining that the inter-frame gap is a fourth gap e4 if the sizes of all of the moving targets are less than the second size threshold f2, and the speeds of all of the moving targets are less than the second speed threshold d2;

determining that the inter-frame gap is a fifth gap e5 if the quantity of the moving targets is 0, wherein f1>f2>0, d1>d2>0, and 0<e1≤e2<e3<e4<e5.

Embodiments of the present disclosure further provide a video compression apparatus, including a memory and a processor connected with the memory. The memory is configured to store instructions and the processor is configured to perform the steps of the video compression method according to any embodiment of the present disclosure based on the instructions stored in the memory.

As shown in FIG. 8, in one example, the video compression apparatus may include a processor 810, a memory 820, a bus system 830, and a transceiver 840. The processor 810, the memory 820, and the transceiver 840 are connected by the bus system 830, the memory 820 is configured to store instructions, the processor 810 is configured to execute the instructions stored in the memory 820 to control the transceiver 840 to transmit and receive signals. Optionally, the transceiver 840 may acquire detection result(s) of one or more first sensors under control of the processor 810, and acquire video data acquired by the image sensor. The detection region of the first sensor and the image acquisition region of the image sensor are at least partially overlapped. The processor 810 determines a target motion parameter according to the acquired detection result, determines a video compression parameter according to the determined target motion parameters, performs video compression on the acquired video data according to the determined video compression parameter, and stores the compressed video in the memory 820 or other storage location.

It should be understood that the processor 810 may be a central processing unit (CPU), and the processor 810 may also be other general purpose processors, a digital signal processor (DSP), an application specific integrated circuit (ASIC), a field programmable gate array (FPGA) or other programmable logic devices, a discrete gate or transistor logic device, a discrete hardware components, or the like. The general purpose processor may be a microprocessor or the processor may be any conventional processor, etc.

The memory 820 may include a read-only memory and a random access memory, and provide instructions and data to the processor 810. A portion of the memory 820 may also include a non-volatile random access memory. For example, the memory 820 may also store information about device type.

The bus system 830 may include a power bus, a control bus, a status signal bus, and the like in addition to a data bus. For clarity of illustration, however, various buses are designated as a bus system 830 in FIG. 8.

During the implementation, the processing performed by a processing device may be accomplished by an integrated logic circuitry of the hardwares in the processor 810 or by instructions in the form of software. The steps of a method according to an embodiment of the present application can be performed by the hardware processor or by a combination of hardware and software modules in the processor. The software module may be located in a storage medium such as a random access memory, a flash, a read-only memory, a programmable read-only memory or an electrically erasable programmable memory, a register, or the like. The storage medium is located in the memory 820, and the processor 810 reads the information in the memory 820, and completes the steps of the above method in conjunction with its hardware. In order to avoid repetition, detailed description will not be made here.

An embodiment of the present disclosure further provides a computer-readable storage medium storing a computer program thereon, the program, when executed by a processor, implements the video compression method according to any embodiment of the present disclosure. The method of driving a prognosis analysis by executing the executable instruction is basically the same as the video compression method provided in the above embodiments of the present disclosure, and will not be repeatedly described herein.

In some possible implementations, various aspects of the video compression method provided by the present disclosure may be further implemented in the form of a program product including program codes. The program product, while running on a computer device, causes the computer device to execute steps in the video compression method according to various exemplary embodiments of the present disclosure as described above in the specification. For example, the computer device may execute the video compression method described in the embodiments of the present disclosure.

The program product may employ any combination of one or more readable mediums. The readable medium may be a readable signal medium or a readable storage medium. For example, the readable storage medium may be, but not limited to, an electrical, magnetic, optical, electromagnetic, infrared, or semiconductor system, apparatus, or device, or a combination of any of the above. More specific examples (a non-exhaustive list) of readable storage mediums include an electrical connection having one or more wires, a portable disk, a hard disk, a random access memory (RAM), a read-only memory (ROM), an erasable programmable read-only memory (EPROM or flash), an optical fiber, a portable compact disk read-only memory (CD-ROM), an optical storage device, a magnetic storage device, or any suitable combination of the above.

It should be noted that the above-described embodiments or implementations are merely exemplary and not limiting. Accordingly, the present disclosure is not limited to what is specifically shown and described herein. Numerous modifications, substitutions, or omissions may be made to the forms and details of the embodiments without departing from the scope of the present disclosure.

**Claims**

1. A video compression method, comprising:

    acquiring a detection result of a first sensor, and determining a target motion parameter according to the detection result;
    determining a video compression parameter according to the target motion parameter; and
    performing video compression on first video data according to the video compression parameter.

2. The video compression method according to claim **1,** wherein the first video data is video data captured by an image sensor, and a detection region of the first sensor is overlapped with an image acquisition region of the image sensor.

3. The video compression method according to claim 2, wherein the detection region of the first sensor being overlapped with the image acquisition region of the image sensor comprises: the detection region of the first sensor being larger than or equal to the image acquisition region of the image sensor.

4. The video compression method according to claim 1, wherein the first sensor comprises any one or more of a radar sensor, an infrared sensor, and a laser sensor.

5. The video compression method according to claim 1, wherein the target motion parameter comprises at least one of: a quantity of moving targets, sizes of the moving targets and speeds of the moving targets.

**6.** The video compression method according to claim 5, wherein the video compression parameter is an inter-frame gap.

**7.** The video compression method according to claim 6, wherein when the target motion parameter comprises the quantity of the moving targets and the speeds of the moving targets, the determining the video compression parameter according to the target motion parameter comprises:
determining the inter-frame gap according to the quantity of the moving targets and the speeds of the moving targets.

**8.** The video compression method according to claim 7, wherein the determining the inter-frame gap according to the quantity of the moving targets and the speeds of the moving targets comprises:

determining that the inter-frame gap is a first gap e1 if the quantity of the moving targets is greater than a first quantity threshold c1 or a speed of at least one of the moving targets is greater than a first speed threshold d1;
determining that the inter-frame gap is a second gap e2 if: the quantity of the moving targets is between the first quantity threshold c1 and a second quantity threshold c2, the speed of at least one of the moving targets is between the first speed threshold d1 and a second speed threshold d2, and speeds of other moving targets are not greater than the first speed threshold d1;
determining that the inter-frame gap is a third gap e3 if: the quantity of the moving targets is between the first quantity threshold c1 and the second quantity threshold c2 and the speeds of all of the moving targets are less than the second speed threshold d2; or the quantity of the moving targets is less than the second quantity threshold c2 and the speeds of all of the moving targets are between the first speed threshold d1 and the second speed threshold d2;
determining that the inter-frame gap is a fourth gap e4 if the quantity of the moving targets is less than the second quantity threshold c2 and greater than 0, and the speeds of all of the moving targets are less than the second speed threshold d2; or
determining that the inter-frame gap is a fifth gap e5 if the quantity of the moving targets is 0;
wherein c1 > c2 > 0, d1 > d2 > 0 and 0<e1≤e2 < e3<e4<e5.

**9.** The video compression method according to claim 6, wherein when the target motion parameter comprises the quantity of the moving targets and the speeds of the moving targets, the determining the video compression parameter according to the target motion parameter comprises:
determining the inter-frame gap according to a weight calculation result x, wherein the weight calculation result x is determined according to the quantity of the moving targets and the speeds of the moving targets.

**10.** The video compression method according to claim 9, wherein the weight calculation result

$$x = \sum_{i=1}^{count} weight1_i * V_i + weight2 * count$$, wherein $V_i$ is a speed of an i-th moving target, and count is the quantity of the moving targets, $weight1_i$ is a first weight coefficient of the i-th moving target, weight2 is a second weight coefficient, $1 \le i \le count$, $weight1_i \ge 0$, $weight2 \ge 0$, and $weight1 = \sum_{i=1}^{count} weight1_i$, weight1+weight2=1.

**11.** The video compression method according to claim 9, wherein the determining the inter-frame gap according to the weight calculation result x comprises:
dynamically adjusting the inter-frame gap according to a parameter relationship between the weight calculation result x and the inter-frame gap, wherein the parameter relationship is IFG=f(x), IFG is the inter-frame gap, x is the weight calculation result, and f(x) represents a function with x as an independent variable.

**12.** The video compression method according to claim 6, wherein when the target motion parameter comprises the sizes of the moving targets and the speeds of the moving targets, the determining the video compression parameter according to the target motion parameter comprises:
determining the inter-frame gap according to the sizes of the moving targets and the speeds of the moving targets.

**13.** The video compression method according to claim 12, wherein the determining the inter-frame gap according to the sizes of the moving targets and the speeds of the moving targets comprises:

determining that the inter-frame gap is a first gap e1 if a size of at least one of the moving targets is greater than a first size threshold f1 or a speed of at least one of the moving targets is greater than a first speed threshold d1;
determining that the inter-frame gap is a second gap e2 if: the sizes of all of the moving targets are between the first size threshold f1 and a second size threshold f2, the speed of at least one of the moving targets is between the first speed threshold d1 and a second speed threshold d2, and speeds of other moving targets are not greater than the first speed threshold d1;

determining that the inter-frame gap is a third gap e3 if: the sizes of all of the moving targets are between the first size threshold f1 and the second size threshold f2, and the speeds of all of the moving targets are less than the second speed threshold d2; or the sizes of all of the moving targets are less than the second size threshold f2 and the speeds of all of the moving targets are between the first speed threshold d1 and the second speed threshold d2;

determining that the inter-frame gap is a fourth gap e4 if the sizes of all of the moving targets are less than the second size threshold f2, and the speeds of all of the moving targets are less than the second speed threshold d2; or

determining that the inter-frame gap is a fifth gap e5 if the quantity of the moving targets is 0;

wherein $f1 > f2 > 0$, $d1 > d2 > 0$ and $0 < e1 \leq e2 < e3 < e4 < e5$.

14. A video compression apparatus comprising a memory and a processor;

> wherein the memory is configured to store program instructions; and
> the processor is configured to invoke the program instructions to implement the video compression method according to any one of claims 1 to 13.

15. A computer-readable storage medium storing a computer program, wherein when the computer program is executed by a processor, the video compression method according to any one of claims 1 to 13 is implemented.

16. A video compression apparatus, comprising: a detection unit, a calculation unit, and a video compression unit, wherein:

> the detection unit is configured to acquire a detection result of a first sensor and determine a target motion parameter according to the detection result;
> the calculation unit is configured to determine a video compression parameter according to the target motion parameter; and
> the video compression unit is configured to perform video compression on first video data according to the video compression parameter.

17. The video compression apparatus according to claim 16, wherein the target motion parameter comprises at least one of:

a quantity of moving targets, sizes of the moving targets and speeds of the moving targets.

18. The video compression apparatus according to claim 17, wherein the video compression parameter is an inter-frame gap.

19. The video compression apparatus according to claim 18, wherein when the target motion parameter comprises the quantity of the moving targets and the speeds of the moving targets, the calculation unit is configured to determine the inter-frame gap according to the quantity of the moving targets and the speeds of the moving targets.

20. The video compression apparatus according to claim 18, wherein when the target motion parameter comprises the sizes of the moving targets and the speeds of the moving targets, the calculation unit is configured to determine the inter-frame gap according to the sizes of the moving targets and the speeds of the moving targets.

1/5

Acquire a detection result of a first sensor, and determining a target mobility motion parameter according to the detection result — 101

Determine a video compression parameter according to the target motion mobility parameter — 102

Perform video compression on a first video data according to the video compression parameter — 103

FIG. 1

FIG. 2

FIG. 3

FIG. 4

FIG. 5

```
                        ┌─────────────┐
                        │    Start    │
                        └──────┬──────┘
                               │
                               ▼
                      ┌────────────────┐
                      │ Create an H264 │
                      │    encoder     │
                      └────────┬───────┘
                               │
                               ▼
                      ┌────────────────┐
                      │   Acquire a    │
                      │ parameter IFG  │
                      └────────┬───────┘
                               │
                               ▼
                      ┌────────────────┐
          ┌──────────▶│  Acquire a frame│
          │           │   of picture    │
          │           └────────┬───────┘
          │                    │
          │                    ▼
          │                ◇ First frame?  ◇
          │        Yes    Satisfy an IFG    No
          │       ◇       configuration?      ◇
          │      ◀────────                 ────────▶
          │      │                                 │
          │      ▼                                 ▼
          │ ┌────────────────┐           ┌────────────────┐
          │ │ Encode the picture│        │ Encode the picture│
          │ │  into an I frame │         │  into a P frame  │
          │ └────────┬───────┘           └────────┬───────┘
          │          │                            │
          │          └─────────────┬──────────────┘
          │                        │
          │                        ▼
          │              ┌────────────────┐
          │              │ Write the video file│
          │              └────────┬───────┘
          │                       │
          │                       ▼
          │       No       ◇ Video recording ◇
          └──────────────◀   is to be end?
                               ◇          ◇
                                    │ Yes
                                    ▼
                        ┌─────────────┐
                        │     End     │
                        └─────────────┘
```

FIG. 6A

Start

Acquire a frame of Radar point cloud

Remove noise points by Kalman filtering

Filter out all points whose speeds are 0

Points whose speeds are not 0 are classified, wherein points among which speed difference is less than 0.1m/s are classified into one category

Filter out a point set in which the number of points is less than 3

Area of a minimum circle on X/Z coordinates of a point set is greater than 0.5m² ?

No

Yes

Determine that the point set corresponds to a moving target

No

All point sets have been determined?

Yes

Compute the IFG parameter according a target set

Radar thread is to be end ?

No

Yes

End

FIG. 6B

710

720

730

Detection unit → Calculation unit → Video compression unit

FIG. 7

Memory 820    Processor 810

830

Transceiver 840

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211551603